# EUROPÄISCHE PATENTSCHRIFT

(11) **EP 2 284 048 B1**
(45) Veröffentlichungstag und Bekanntmachung des Hinweises auf die Patenterteilung: **12.03.2014**
(21) Anmeldenummer: 10000963.8
(22) Anmeldetag: 30.01.2010
(51) Int. Cl.: B60R 21/2165, B60R 21/205

(54) **Verkleidungsteil mit Airbagklappenanordnung im Innenraum eines Kraftfahrzeuges**
Cladding section with airbag flap assembly in the interior of a motor vehicle
Elément d'habillage doté d'un agencement de clapets d'airbag dans l'espace intérieur d'un véhicule automobile

(30) Priorität: 28.07.2009 DE 102009034916; 28.07.2009 DE 102009034923
(43) Veröffentlichungstag der Anmeldung: 16.02.2011
(73) Patentinhaber: GM Global Technology Operations LLC, Detroit, MI 48265-3000 (US)
(72) Erfinder: Wagner, Udo, 65428 Rüsselsheim (DE); Rick, Ulrich, 55595 Braunweiler (DE)
(74) Vertreter: Strauss, Peter

(56) Entgegenhaltungen:
- EP-A1- 1 002 703
- EP-A2- 1 731 381
- WO-A1-03/011657
- US-A1- 2009 134 608

## Beschreibung

Die Erfindung betrifft ein Verkleidungsteil im Innenraum eines Kraftfahrzeuges, wobei sich im Verkleidungsteil eine Airbagklappenanordnung befindet, die beim Auslösen eines Airbags entlang mindestens einer Scharnierlinie schwenkt.

Derartige Verkleidungsteile für Airbagmodule finden umfangreich in Kraftfahrzeugen Verwendung, insbesondere bei Personenkraftwagen im Zusammenhang mit dessen Armaturentafel. Die Airbagklappenanordnung weist beispielsweise eine Klappe auf, die entlang einer Scharnierlinie und mindestens einer Aufreißlinie befestigt ist, wobei beim Auslösen des Airbags die Aufreißlinie reißt und die Klappe entlang des Scharniers schwenkt. Es sind auch Airbagklappenanordnungen mit mehreren Klappen, insbesondere zwei Klappen, bekannt, wobei die jeweilige Klappe um eine Scharnierlinie schwenkbar ist und entsprechend Aufreißlinien zwischen der Klappe und dem diese umgebenden Verkleidungsteilabschnitt bzw. der anderen Airbagklappe gebildet sind.

Airbagklappenanordnungen, die die Austrittsöffnung eines Beifahrerairbags in der Armaturentafel verschließen und bei aktiviertem Beifahrerairbag von diesem geöffnet werden, weisen eine flache, wenig oder gar nicht konturierte Oberfläche auf. Da das Öffnen der Klappenanordnung ein hochdynamischer Vorgang ist, bei dem die Klappenanordnung selbst Vorbelastungen erfährt, wird angestrebt, die Komplexität derselben möglichst gering zu halten. Dies geschieht indem die Klappenanordnung flach und im Wesentlichen eben gestaltet ist.

Diese flache und ebene Gestaltung der Klappenänordnung und überdies die ebene Gestaltung eines die Klappenanordnung umgebenden Schusskanals auf deren dem Fahrzeuginnenraum zugewandten Seite beinhaltet den Nachteil, dass die dem Fahrzeuginnenraum zugewandte, somit dem Fahrzeuginsassen sichtbare weitere Verkleidung, insbesondere eine die weitere Verkleidung bildende Armaturentafel im Erscheinungsbild nicht dynamisch im Sinne einer stärkeren Konturierung gestaltet werden kann.

Aus der DE 10 2006 008 564 A1 ist bei einer Verkleidung für ein Airbagmodul eine Luftsackgleitvorrichtung bekannt, die sicherstellt, dass bei ausgelöstem Airbagmodul der sich mit Gas füllende Luftsack des Airbagmoduls beschädigungsfrei entfalten und somit den Fahrzeuginsassen schützen kann.

Eine Verkleidung, der der Fachmann die Merkmale des Oberbegriffs des Patentanspruchs 1 entnehmen kann, ist aus der EP 1 731 381 A2 bekannt.

Die Aufgabe der vorliegenden Erfindung ist es, ein Verkleidungsteil der eingangs genannten Art so weiter zu bilden, dass dieses, durch eine besondere Gestaltung im Bereich der Airbagklappenanordnung, ein dynamisches Aussehen aufweist.

Gelöst wird die Aufgabe durch ein Verkleidungsteil, das gemäß den Merkmalen des Patentanspruchs 1 ausgebildet ist.

Das erfindungsgemäße Verkleidungsteil ermöglicht es somit, dem Innenraum des Kraftfahrzeuges ein dynamisch gestaltetes Erscheinungsbild aufgrund des stufenartigen Höhenunterschieds zu verleihen. Diese Möglichkeit der optischen Aufwertung des Innenraums im Bereich der Airbagklappenanordnung gestattet es auch, den an die Airbagklappenanordnung angrenzenden Bereich des Fahrzeuginnenraums, insbesondere die Armaturentafel, entsprechend mit stufenartigem Höhenunterschied, somit dynamisch gestaltetem Erscheinungsbild, auszuführen. Den unterschiedlichen Höhenniveaus im Bereich der Airbagklappenanordnung und des diese umgebenden Verkleidungsteilabschnitts können dann die Höhenniveaus der dem Fahrzeuginsassen sichtbaren weiteren Verkleidung, insbesondere der Armaturentafel folgen.

Der stufenartige Höhenunterschied kann sich zwischen der Airbagklappenanordnung und dem diese umgebenden Verkleidungsteilabschnitt erstrecken. Der stufenartige Höhenunterschied wird somit durch den Übergang zwischen Abdeckklappenanordnung und dem diese umgebenden Verkleidungsteilabschnitt bewirkt. Das dynamisch gestaltete Erscheinungsbild des Verkleidungsteils ergibt sich aufgrund des stufenartigen Höhenunterschieds im Übergang von der Abdeckklappenanordnung zu dem diese umgebenden Verkleidungsteilabschnitt.

Da die Airbagklappenanordnung zwei um jeweils eine Scharnierlinie schwenkbare Airbagklappen aufweist, die insbesondere zwischen sich eine mittlere Aufreißlinie bilden, ergeben sich diverse vorteilhafte Gestaltungen des Verkleidungsteils, um dessen dynamisch gestaltetes Erscheinungsbild infolge des stufenartigen Höhenunterschiedes zu erreichen. Hierbei kann die Airbagklappenanordnung durchaus jeweils zwischen der Scharnierlinie und der mittleren Aufreißlinie seitliche Aufreißlinien bilden. Überdies sind vorzugsweise die Scharnierlinien parallel angeordnet.

Gemäß der Erfindung ist vorgesehen, dass der stufenartige Höhenunterschied die Scharnierlinie einer der beiden Airbagklappen und eine seitliche Aufreißlinie dieser Airbagklappen kreuzt.

Die jeweilige Airbagklappe ist, abgesehen vom stufenartigen Höhenunterschied, bevorzugt im Wesentlichen eben ausgebildet. Durch diese Gestaltung wird die Komplexität der Klappe gering gehalten, abgesehen von deren Ausbildung im Bereich des stufenartigen Höhenunterschieds.

Gemäß einer besonderen Ausführungsform der Erfindung ist vorgesehen, dass Bestandteil des Verkleidungsteil ein Schusskanal ist, und die Airbagklappenanordnung bei nicht ausgelöstem Airbag eine Austrittsöffnung des Schusskanals verschließt. Dieser Schusskanal ist, da er Bestandteil des Verkleidungsteils bildet, im Bereich seiner dem Fahrzeuginnenraum zugewandten Oberfläche gleichfalls mit dem Höhensprung versehen und trägt dazu bei, die dynamisch stärkere Konturierung in diesem Bereich der Verkleidung, insbesondere in diesem Bereich der Armaturentafel zu erzielen.

Neben der Airbagklappenanordnung kann eine Luftsackgleitvorrichtung angeordnet sein, die in einem Zwischenraum zwischen der in Schließstellung angeordneten Airbagklappenanordnung und dem Schusskanal angeordnet ist. Die Luftsackgleitvorrichtung unterstützt beim Aufblasen des Airbags dessen Entfaltung, somit dessen Durchtritt durch den Schusskanal und Austritt aus diesem. In diesem Fall ist insbesondere der Höhensprung im Übergang von der Airbagklappenanordnung zu dem diese umgebenden Verkleidungsteilabschnitt, somit dem Schusskanal gebildet. Dadurch, dass die Airbagklappenanordnung kein unterschiedliches Höhenniveau aufweisen muss, kann diese einfach mittels des Scharniers und der durchtrennbaren Verbindungen, somit im Bereich der Ausreißlinie gelagert werden und es nur erforderlich, die Klappenanordnung nach dem Durchtrennen der durchtrennbaren Verbindung um die eine, durch das Scharnier gebildete Achse zu schwenken. Beim Öffnen der Klappe gleitet der Luftsack störungsfrei entlang der Luftsackgleitvorrichtung durch die Austrittsöffnung des Schusskanals.

Gemäß einer besonderen Ausführungsform der Erfindung sind die beiden Klappen auf einander abgewandten Seiten mittels der Scharniere mit dem Schusskanal verbunden sind und die beiden Klappen mittels der durchtrennbaren Verbindung verbunden sind.

Beim Auslösen des Luftsacks des Airbagmoduls werden somit aufgrund der über den Luftsack in die Klappen eingeleiteten Kräfte die Verbindungen zwischen den beiden Klappen durchtrennt, womit beide Klappen unter Einwirkung des Luftsacks um deren Scharnierachse in den Innenraum des Fahrzeugs schwenken.

Gemäß einer bevorzugten Ausführungsform ist vorgesehen, dass die jeweilige Klappe als Platte, insbesondere dünnwandig ausgebildete Platte mit Verstärkungsrippen gestaltet ist. Hierdurch ergibt sich für die recht dünn gestaltete Klappe eine ausreichende Steifigkeit, die sicherstellt, dass beim Öffnen der Klappe und der damit auf diese einwirkenden hohen Belastungen keine Beschädigung, insbesondere Fragmentierung der Klappe erfolgt.

Die unterschiedlichen Höhenniveaus, insbesondere von Schusskanaloberfläche und/oder Oberfläche der Luftsackgleitvorrichtung werden insbesondere durch Stufen oder Schrägen erzeugt. Ob eine Stufe oder Schräge gewählt wird, hängt letztendlich davon ab, in welchem Maße der Verkleidung des Airbagmoduls bzw. der weiteren Verkleidung ein dynamisches Erscheinungsbild verliehen werden soll.

Die Luftsackgleitvorrichtung kann ein in dem Schusskanal gelagertes separates Bauteil sein. Es ist aber durchaus denkbar, dass die Luftsackgleitvorrichtung und der Schusskanal eine Baueinheit bilden, somit einteilig gestaltet sind. Als weitere Alternative kann die Luftsackgleitvorrichtung mit einer Armaturentafelstruktur des Kraftfahrzeugs eine Baueinheit bilden. Insbesondere dann, wenn die Luftsackgleitvorrichtung ein separates Bauteil darstellt, ist diese vorzugsweise als Schaumelement ausgebildet. Die Luftsackgleitvorrichtung besteht insbesondere aus Metall oder Kunststoff.

Die erfindungsgemäße Verkleidung findet insbesondere Verwendung im Zusammenhang mit einer weiteren, dünnwandigen Verkleidung hierfür, die eine dem Innenraum des Kraftfahrzeugs zugeordnete Oberfläche aufweist. Diese Oberfläche weist Höhenunterschiede auf, die den Höhenunterschieden der Oberflächen von Airbagklappenanordnung und diesen umgebenden Verkleidungsteilabschnitt, insbesondere von Schusskanal und Luftsackgleitvorrichtung entsprechen. Bei der weiteren Verkleidung handelt es sich vorzugsweise um eine Armaturentafel, insbesondere eine Armaturentafel im Bereich eines Beifahrersitzes. Die weitere Verkleidung kann eine harte oder weiche Oberfläche aufweisen. Findet eine weiche Oberfläche Verwendung, ist diese insbesondere folienkaschiert oder geschäumt.

Um das Erscheinungsbild von Verkleidungen für Airbagmodule, insbesondere das Erscheinungsbildung von Armaturentafeln dynamischer gestalten zu können, schlägt die Erfindung somit insbesondere vor, schräge oder stufenartige Höhenunterschiede an der Armaturentafeloberfläche und der Schusskanaloberfläche sowie der Oberfläche der Luftsackgleitvorrichtung zu realisieren. Diese Höhensprünge können sowohl geradlinig als auch kurvenförmig verlaufen. Die Kontur der Klappe wird derart ausgeführt, dass diese weiterhin möglichst flach und eben gestaltet ist. Dies bedeutet, dass der schräge oder stufenartige Höhenunterschied im Bereich der Klappenanordnung oder neben der Klappenanordnung, somit im Bereich der Klappenanordnung erfolgt, beispielsweise im Bereich der Schusskanaloberfläche und der Oberfläche der Luftsackgleitvorrichtung. Es ergibt sich durch diese Gestaltung eine Austrittsöffnung des Schusskanals, die den Luftsack nur partiell überdeckt. Um den Luftsack bei dessen Entfaltung zu führen, ist die Luftsackleitvorrichtung vorgesehen. Sie verhindert bei der hochdynamischen Beaufschlagung des Luftsacks eine Beschädigung des Luftsacks bzw. der Armaturentafel, da der Luftsack störungsfrei in Richtung der Austrittsöffnung geleitet wird.

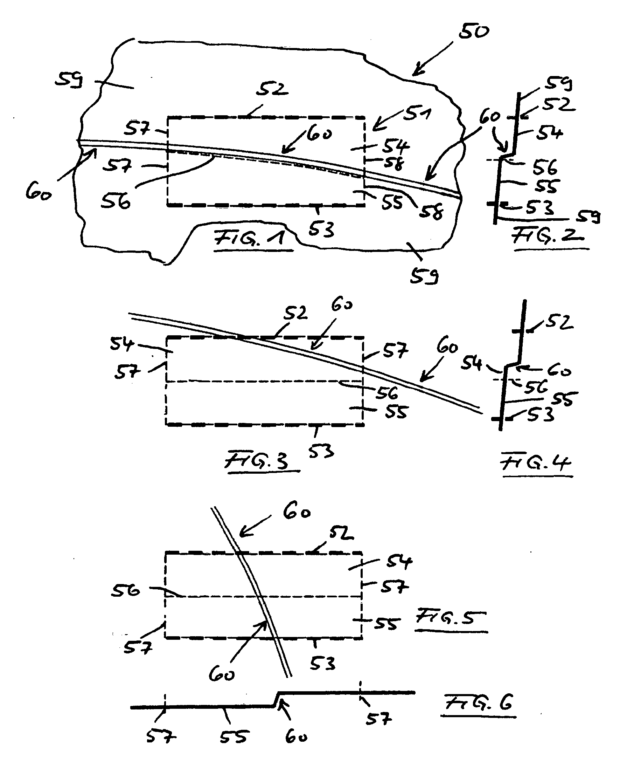

Die Erfindung ist in der Zeichnung verschaulicht und in der nachfolgenden Beschreibung erläutert. Hierbei verdeutlichen insbesondere die Figuren 3 und 4 erfindungsrelevante Merkmale des Verkleidungsteils.

Es zeigt in schematischer Darstellung für ein Verkleidungsteil, bei dem die Klappenanordnung aus zwei Absperrklappen gebildet ist, in einer Draufsicht:
- Fig. 1: die Anordnung des Höhensprungs im Bereich einer Aufreißlinie, die die beiden Absperrklappen verbindet, in einer Draufsicht,
- Fig. 2: die Anordnung gemäß Fig 1 von der Seite gesehen,
- Fig. 3 und 4: Darstellungen gemäß der Figuren 1 und 2 für eine Anordnung zweier Airbagklappen, bei denen der Höhensprung im Bereich einer Scharnierlinie und einer seitlichen Aufreißlinie einer der Airbagklappen verläuft,
- Fig. 5 und 6: Darstellungen gemäß der Figuren 1 und 2 einer weiteren Ausführungsform einer Anordnung von Airbagklappen, bei denen der Höhensprung die Scharnierlinien der beiden Airbagklappen und die die beiden Airbagklappen verbindende Aufreißlinie schneidet.

Es zeigen ferner für konkrete Ausbildungen des Verkleidungsteils:
- Fig. 7: ein Ausführungsbeispiel einer räumlichen Ansicht der Verkleidung, die einen Schusskanal und eine Luftsackgleitvorrichtung aufweist,
- Fig. 8: einen Schnitt durch die Bauteile gemäß der Schnittebene II-II in Figur 7,
- Fig. 9: für ein gegenüber dem Ausführungsbeispiel nach Figur 7 modifiziertes Ausführungsbeispiel eine räumliche Ansicht, schräg von oben gesehen,
- Fig. 10: eine weitere Gestaltung des Verkleidungsteils mit Schusskanal, die keine Luftsackgleitvorrichtung aufweist, schräg von oben gesehen, mit zwei eingezeichneten Schnittebenen,
- Fig. 11: einen Schnitt durch die Bauteile gemäß der Schnittebene II in Figur 10,
- Fig. 12: einen Schnitt durch die Bauteile gemäß der Schnittebene III in Figur 10.

Die Figuren 1 und 2 zeigen die erste Ausführungsform eines Verkleidungsteils 50 im Innenraum eines Kraftfahrzeugs, insbesondere im Bereich einer Armaturentafel eines Personenkraftwagens, dort wo sich ein Beifahrerairbag befindet. Das Verkleidungsteil 50 weist eine Airbagklappenanordnung 51 auf. Diese weist zwei um jeweils eine Scharnierlinie 52, 53 (bzw. Scharnier 52, 53) schwenkbare Airbagklappen 54, 55 auf. Diese bilden zwischen sich eine mittlere Aufreißlinie 56, die somit eine bei Auslösen des Airbags durchtrennbare Verbindung, die als Steg ausgebildet ist, darstellt. Die Scharnierlinien 52 und 53 sind parallel zueinander angeordnet. Im Bereich der freien Enden der Scharnierlinien 52 und 53 verbinden diese seitliche Aufreißlinien 57 und 58, die parallel zueinander angeordnet sind, so dass die seitlichen Aufreißlinien 57 und 58 und die Scharnierlinien 52 und 53 ein Rechteck bilden. Die seitlichen Aufreißlinien 57 und 58 begrenzen die Airbagklappen 54 und 55 zur Seite hin und sind gleichfalls als durchtrennbare Verbindung bzw. Steg zu dem die Airbagklappen 54, 55 umgebenden Verkleidungsteilabschnitt 59 positioniert.

Das Verkleidungsteil 50 weist einen als Stufe 60 ausgebildeten Höhenunterschied auf der dem Innenraum des Personenkraftwagens zugewandten Oberfläche des Verkleidungsteils 50 auf und es befindet sich die Airbagklappenanordnung 51 im Bereich des Höhenunterschieds. Konkret erstreckt sich die Stufe 60 entlang der mittleren Aufreißlinie 56, ist somit entsprechend der veranschaulichten leichten Krümmung der mittleren Aufreißlinie 56 gekrümmt und setzt sich mit leichter Krümmung über die beiden seitlichen Aufreißlinien 57, 58 hinaus im die Airbagklappenanordnung 51 umgeben Verkleidungsteilabschnitt 59 fort. Beim Auslösen des Airbags und damit Beaufschlagen der beiden Airbagklappen 54 und 55 mittels des Luftsacks des Airbags reißt die Airbagklappenanordnung 51 entlang der mittleren Aufreißlinie 56 und der seitlichen Aufreißlinien 57, 58, so dass die beiden Airbagklappen 54, 55 um deren Scharnierlinien 52, 53 in den Innenraum des Kraftfahrzeuges schwenken. Die Trennung der Airbagklappenanordnung 51 erfolgt hierbei zwischen der eben gestalteten Airbagklappe 55 und der Airbagklappe 54, die unmittelbar angrenzend an die mittlere Aufreißlinie die Stufe 60 aufweist und die Anschlagklappe 54 vom erhöhten Bereich dieser Stufe 60 eben zur Scharnierlinie 52 hin fortsetzt.

Die Ausführungsform nach den Figuren 3 und 4 unterscheidet sich von derjenigen nach den Figuren 1 und 2 nur dadurch, dass die mittlere Aufreißlinie 56 gerade angeordnet ist und die Airbagklappenanordnung 51 in zwei identisch gestaltete Airbagklappen 54, 55 unterteilt, somit die mittlere Aufreißlinie 56 parallel zu den Scharnierlinien 52 und 53 angeordnet ist. Des Weiteren ist bei dieser Ausführungsform die Stufe 60 im Bereich der Airbagklappenanordnung 51 und dem umgebenden Verkleidungsteilabschnitt 59 so angeordnet, dass die entlang einer leicht gekrümmten Linie verlaufende Stufe 60 die Scharnierlinie 52 und die seitliche Aufreißlinie 58 im Bereich der Airbagklappe 54 kreuzt. Der Höhensprung ist somit nur im Bereich der Airbagklappe 54 und dem im Bereich dieser Airbagklappe 54 angeordneten, umgebenden Verkleidungsteilabschnitt 59 ausgebildet.

Die Ausführungsform nach den Figuren 5 und 6 unterscheidet sich von derjenigen nach den Figuren 3 und 4 nur dadurch, dass die Stufe 60 anders positioniert ist. Die Stufe 60, die in deren Längserstreckung wiederum leicht gekrümmt ist, kreuzt sowohl die Scharnierlinie 52 als auch die Scharnierlinie 53 und infolgedessen auch die mittlere Aufreißlinie 56. Hierdurch unterteilt die Stufe 26 die Airbagklappenanordnung 51 in zwei Teilbereiche, wobei die Trennung etwa in der Mitte der Airbagklappenanordnung 51 zwischen den seitlichen Aufreißlinien 57 und 58 erfolgt.

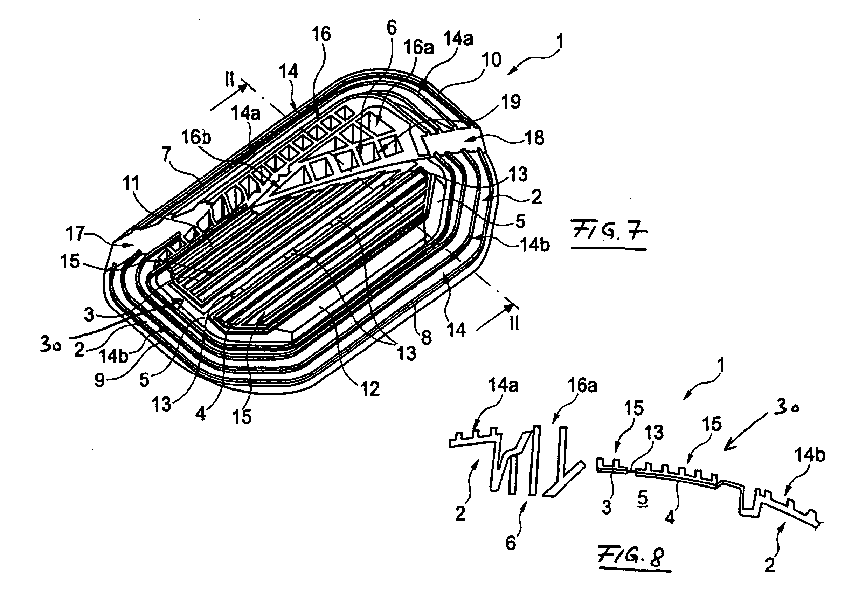

In dem konkreten einen Ausführungsbeispiel der Erfindung gemäß der Figuren 7 und 8 sind die für das Verständnis der Erfindung relevanten Bauteile einer Verkleidung 1 für das Airbagmodul veranschaulicht, konkret die Ausbildung eines Schusskanals 2, die Airbagklappenanordnung 30 mit zwei Klappen 3 und 4, die dem Verschließen einer Austrittsöffnung 5 des Schusskanals 4 dienen, sowie einer Luftsackgleitvorrichtung 6. Nicht gezeigt sind Elemente des Airbagmoduls, wie Luftsack, Zündvorrichtung USW.

Der Schusskanal 2 ist ringförmig ausgebildet und dient dem Durchtreten des Luftsacks des Airbagmoduls bei dessen Auslösen. Der Schusskanal 2 weist zwei im Wesentlichen parallel zueinander angeordnete längere Seiten 7 und 8 und zwei diese verbindende Seiten 9 und 10 auf. In deren Schließstellung nehmen die beiden Klappen 3 und 4 im Wesentlichen den Querschnitt der Austrittsöffnung 5 ein. Die Klappe 3 ist im Bereich ihres einen Endes rechteckig, im Bereich ihres anderen Endes dreieckig ausgebildet. Die andere Klappe 4 ist im Bereich des jeweiligen Endes trapezförmig gestaltet. Die Klappe 3 ist über ein Scharnier 11 mit dem Schlusskanal 2 im Bereich dessen Seite 7 verbunden. Die Klappe 4 ist über ein Scharnier 12 mit dem Schusskanal 2 im Bereich dessen Seite 8 verbunden. Die beiden Klappen 3 und 4 sind im Bereich der einander zugewandten Seiten mittels mehrerer als Stege ausgebildeter durchtrennbarer Verbindungen 13 miteinander verbunden.

Der Schusskanal 2 weist eine der ringförmigen Gestaltung des Schusskanals 2 entsprechende, ringförmig umlaufende Oberfläche 14 auf, die einem Innenraum des Kraftfahrzeuges, insbesondere eines Personenkraftwagens zugewandt ist. Auch die beiden Klappen 3 und 4 weisen, bezogen auf deren veranschaulichte Schließstellung, eine dem Innenraum des Kraftfahrzeuges zugewandte Oberfläche 15 auf. Aufgrund des dreieckförmig gestalteten Endes der Klappe 3 ist zwischen der Klappe 3 und dem Eckbereich des Schusskanals 2 im Bereich dessen Seiten 7 und 10 ein freier Raum zur Aufnahme der im Schusskanal gelagerten Luftsackgleitvorrichtung 6 gebildet. Deren dem Innenraum des Kraftfahrzeuges zugewandte Oberfläche ist mit der Bezugsziffer 16 bezeichnet.

In nicht gezeigter Art und Weise sind der Schusskanal 2, die Klappen 3 und 4 sowie die Luftsackgleitvorrichtung 6 im Bereich deren Oberflächen 14, 15 und 16 mittels einer weiteren, dünnwandigen Verkleidung abgedeckt, bei der es sich insbesondere um die Armaturentafelverkleidung im Bereich des Beifahrersitzes des Kraftfahrzeuges handelt. Beim Auslösen des Airbags wird der Luftsack gezündet und beim Aufblasen des Luftsacks dieser mittels der Luftsackgleitvorrichtung 6 in Richtung der Austrittsöffnung 5 geführt. Der Luftsack drückt beim Aufblasen gegen die beiden Klappen 3 und 4, womit die Stege 13, aufgrund der in die Klappen 3 und 4 eingeleiteten Kräfte, durchtrennt werden und die beiden Klappen 3 und 4 um die Achsen der Scharniere 11 und 12 in deren Öffnungsstellung schwenken können. Dabei zerreißt die weitere Verkleidung. Hierdurch ist für den Luftsack eine Austrittsöffnung in der Verkleidung gebildet. Durch diese Öffnung kann der Luftsack in den Innenraum des Fahrzeuges austreten und den Fahrzeuginsassen schützen.

Die Scharniere 10 und 11 sind als Textilscharniere oder als Filmscharniere ausgebildet, somit flexibel.

Die beiden Klappen 3 und 4 sind im Wesentlichen eben ausgebildet, wie es der Schnittdarstellung gemäß Figur 2 zu entnehmen ist. Die Klappen 3 und 4 weisen jeweils über deren gesamte Länge die im Wesentlichen ebene Oberfläche 15 auf. Auch weist der Schusskanal 2 in seinem der Klappe 4 benachbarten Bereich sowie der Schusskanal 2 im Bereich der Seite 9 einen im Wesentlichen ebenen Bereich der Oberfläche 14 auf. In der Schließstellung der beiden Klappen 3 und 4 bilden diese erörterten Bereiche der Oberfläche 14 und die Oberfläche 15 der beiden Klappen 3 und 4 im Wesentlichen eine Ebene.

Im Unterschied hierzu ist die Oberfläche 14 des Schusskanals 2 in dem die Luftsackgleitvorrichtung 6 umgebenden Bereich nicht eben gestaltet, sondern weist, ausgehend von dem der Seite 9 benachbarten Ende der Seite 7 des Schusskanals 2 einen Höhensprung 17 auf. Auf dem hierdurch gebildeten höheren Niveau verläuft die Oberfläche 14 bis zu der Ecke im Bereich der Seiten 7 und 10 des Schusskanals 2 und von dort weiter auf dem erhöhten Niveau bis etwa zu der Verlängerung der Trennfuge zwischen den beiden Klappen 3 und 4; von dort zu einem weiteren Höhensprung 18 vom höheren Niveau im Bereich der Seite 10 zum niedrigeren Niveau im Bereich dieser Seite. Demzufolge weist der Schusskanal 2 einen Oberflächenbereich 14a erhöhten Niveaus und ein Oberflächenbereich 14b nicht erhöhten Niveaus auf.

Die in der Draufsicht im Wesentlichen dreieckförmige Luftsackgleitvorrichtung 6 ist gleichfalls nicht eben ausgebildet. Sie weist im Bereich deren Oberfläche 16, benachbart der Ecke der Seiten 7 und 10 einen erhöhten Oberflächenbereich 16a auf. Der verbleibende Bereich der Luftsackgleitvorrichtung 6, dessen Oberflächenbereich 16b nicht erhöht ist, ist über einen in der Flucht der Höhensprünge 17 und 18 angeordneten Höhensprung 19 mit dem erhöhten Oberflächenbereich 16a verbunden. Dieser erhöhte Oberflächenbereich 16a bildet, bezogen auf den Eckbereich des Schusskanals 2 im Bereich der Seiten 7 und 10 eine ebene Oberfläche, gebildet durch die Oberflächenbereiche 16a und 14a.

Durch die beschriebenen unterschiedlichen Höhenniveaus des Schusskanals 2 und der Luftsackgleitvorrichtung 6 bei Ausbildung ebener Klappen 3 und 4 lässt sich durch die starke Konturierung dieser Bauteile die diese Bauteile abdeckende Verkleidung gleichfalls stark konturieren. Hierdurch besteht die Möglichkeit, diese dem Fahrzeuginsassen sichtbare Verkleidung des Airbagmoduls im Erscheinungsbild dynamisch im Sinne der starken Konturierung gestalten.

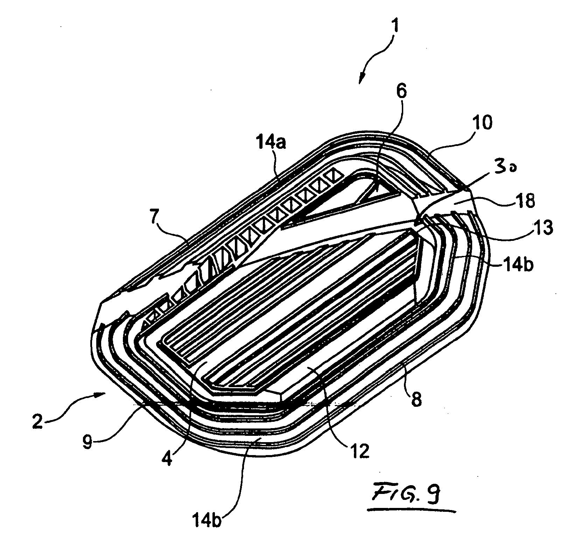

Das Ausführungsbeispiel nach der Figur 9 unterscheidet sich von dem nach den Figuren 7 und 8 nur dadurch, dass statt der gemäß der Erfindung vorgesehenen beiden Klappen 3 und 4 nur eine Klappe 4 vorgesehen ist, die der Form der Klappen 3 und 4 gemäß dem Ausführungsbeispiel nach Figur 1 entspricht, wobei die dort zwischen den beiden Klappen 3 und 4 vorgesehenen Stege 13 entfallen und stattdessen eine dauerhafte, feste Verbindung zwischen den Klappen 3 und 4 zur Bildung der einen Klappe 4 gemäß Ausführungsbeispiel nach Figur 3 vorgesehen ist. Diese eine Klappe 4 ist mittels eines Scharniers 12 im Bereich der Seite 9 mit dem Schusskanal 2 verbunden. Die durchtrennbare Verbindung 13 in Art eines Steges verbindet die Platte 4 mit dem Schusskanal 2 im Bereich dessen Seite 10, und zwar im nicht erhöhten Oberflächenbereich 14b vor dem Höhensprung 18.

Die Luftsackgleitvorrichtung 6 ist beispielsweise als Schaumelement ausgebildet. Sie besteht insbesondere aus Kunststoff. Als Material für die Luftsackgleitvorrichtung ist durchaus auch Metall geeignet.

Die dem Innenraum des Kraftfahrzeuges zugewandte Oberfläche der weiteren, dem Fahrzeuginsassen sichtbaren Verkleidung weist Höhenunterschiede auf, die den Höhenunterschieden der Oberflächen von Schusskanal 2 und Luftsackgleitvorrichtung 6 entsprechen und im Bereich der Klappen 3 und 4 entsprechend deren im Wesentlichen ebenen Oberfläche gestaltet ist. Diese Verkleidung kann eine harte Oberfläche oder eine weiche Oberfläche aufweisen. Eine Verkleidung mit weicher Oberfläche wird insbesondere mittels einer Folienkaschierung oder durch einen Schaum gebildet.

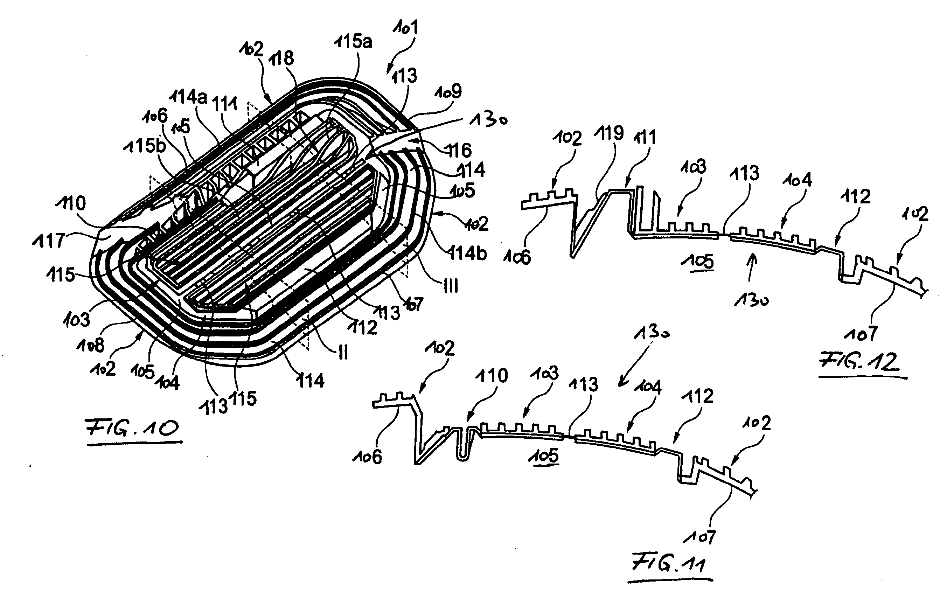

Nachfolgend ist die weitere Ausführungsform gemäß der Figuren 10 bis 12 beschrieben:

Der Schusskanal 102 ist ringförmig ausgebildet und dient dem Durchtreten des Luftsacks des Airbagmoduls bei dessen Auslösen. Der Schusskanal 102 weist zwei im Wesentlichen parallel zueinander angeordnete längere Seiten 106 und 107 und zwei diese verbindende Seiten 108 und 109 auf. In deren Schließstellung nehmen die beiden die Klappenanordnung 130 bildenden Klappen 103 und 104 im Wesentlichen den Querschnitt der Austrittsöffnung 105 ein. Eine Klappe 103 ist benachbart der Seite 106 über zwei Scharniere 110 und 111 mit der Seite 106 des Schusskanals 102 verbunden. Das jeweilige Scharnier 110 bzw. 111 erstreckt sich über eine Länge, die geringfügig kürzer ist als die halbe Länge der Klappe 103. Die Klappe 104 ist auf ihrer der Seite 107 des Schusskanals 102 zugewandten Seite mittels eines Scharniers 112 mit dem Schusskanal 102 verbunden, wobei das Scharnier 112 eine Länge aufweist, die geringfügig kürzer ist als die Länge der Klappe 104 im Bereich ihrer der Seite 107 des Schusskanals 102 zugewandten Seite. Die beiden Klappen 103 und 104 sind im Bereich der einander zugewandten Seiten mittels mehrerer als Stege ausgebildeter durchtrennbarer Verbindungen 113 miteinander verbunden.

Der Schusskanal 102 weist eine der ringförmigen Gestalt des Schusskanals 102 entsprechende, ringförmig umlaufende Oberfläche 114 auf, die einem Innenraum des Kraftfahrzeuges, insbesondere eines Personenkraftwagens zugewandt ist. Auch die beiden Klappen 103 und 104 weisen, bezogen auf deren veranschaulichte Schließstellung, eine dem Innenraum des Kraftfahrzeuges zugewandte Oberfläche 115 auf. In nicht gezeigter Art und Weise sind der Schusskanal 102 und die Klappen 103 und 104 im Bereich deren Oberflächen 114 und 115 mittels einer weiteren, dünnwandigen Verkleidung abgedeckt, bei der es sich insbesondere um die Armaturentafel im Bereich des Beifahrersitzes des Kraftfahrzeuges handelt. Diese Armaturentafel kann mit harter Oberfläche oder mit weicher Oberfläche ausgebildet sein. Beim Auslösen des Airbags drückt der Luftsack beim Aufblasen gegen die beiden Klappen 103 und 104, womit die Stege 113, aufgrund der in die Klappen 103 und 104 eingeleiteten Kräfte, durchtrennt werden und die beiden Klappen 103 und 104 um die Scharniere 110 und 111 bzw. 112 in deren Öffnungsstellung schwenken können und hierbei die Verkleidung aufreißen. Hierdurch ist für den Luftsack eine Austrittsöffnung in der Verkleidung gebildet. Durch diese Öffnung kann der Luftsack in den Innenraum des Fahrzeugs austreten und den Fahrzeuginsassen schützen.

Die Scharniere 110, 111 und 112 sind als Textilscharniere oder als Filmscharniere ausgebildet, somit flexibel.

Die Klappe 104 ist im Wesentlichen eben ausgebildet, wie es den Schnittdarstellungen zu entnehmen ist. Sie weist somit über deren gesamte Länge eine im Wesentlichen ebene Oberfläche 115 auf. Auch weist der Schusskanal 102 in seinem der Klappe 104 benachbarten Bereich eine im Wesentlichen ebene Oberfläche 114 auf. In der Schließstellung der beiden Klappen 103 und 104 bilden die Oberfläche 115 der Klappe 104 und der diese umgebende Bereich der Oberfläche 114 des Schusskanals 102 im Wesentlichen eine Ebene.

Im Unterschied hierzu ist die Oberfläche 114 des Schusskanals 102 in dem die andere Klappe 103 umgebenden Bereich nicht eben gestaltet, sondern weist, ausgehend von der Seite 107, etwa auf halber Länge der Seite 109 einen Höhensprung 116 auf. Auf diesem hierdurch gebildeten höheren Niveau verläuft die Oberfläche 114 bis zu der Ecke im Bereich der Seiten 109 und 106 des Schusskanals 102 und von dort weiter auf dem erhöhten Niveau, leicht abfallend bis zum Bereich des Schusskanals 102, in dem die Seiten 106 und 108 aufeinandertreffen. Dort ist ein weiterer Höhensprung 117 vom höheren Niveau im Bereich der Seite 106 zum niedrigeren Niveau im Bereich der Seite 107 gebildet. Demzufolge weist der Schusskanal 102 einen Oberflächenbereich 114a erhöhten Niveaus und einen Oberflächenbereich 114b nicht erhöhten Niveaus auf.

Im Unterschied zur Klappe 104 ist die Klappe 103 nicht eben ausgebildet und weist im Bereich deren Oberfläche 115, benachbart der Ecke der Seiten 106 und 109 einen erhöhten Oberflächenbereich 115a auf. Der verbleibende Bereich der Klappe 103, dessen Oberflächenbereich 115b nicht erhöht ist, ist über einen Höhensprung 118 mit dem erhöhten Oberflächenbereich 115a verbunden. Der erhöhte Oberflächenbereich 115a bildet, bezogen auf den Eckbereich des Schusskanals 102 im Bereich der Seiten 106 und 109, eine ebene Oberfläche, gebildet durch die Oberflächenbereiche 115a und 114a.

Wie insbesondere der Darstellung der Figuren 11 und 12 zu entnehmen ist, erfolgt aufgrund der Höhensprünge 117 und 118 die Anbindung der Klappe 103 am Schusskanal 102 über das auf tiefer liegenderem Niveau angeordnete Scharnier 110, während die Anbindung der Klappe 103 an den Schusskanal 102 im Bereich dessen höher liegenderem Niveaus mittels des auf höher liegenderem Niveau angeordneten Scharniers 111 erfolgt. Dies würde, ohne zusätzliche Maßnahmen zu treffen, ein Schwenken der Klappe 103 um auf unterschiedlichen Höhenniveaus angeordnete Schwenkachsen der Scharniere 110 und 111 bedeuten. Um beim Beaufschlagen des Luftsacks und damit dem Schwenken der Klappen 103 und 104 in deren Öffnungsstellung ein Schwenken der Klappe 103 um dieselbe Schwenkachse im Bereich der Scharniere 110 und 111 zu bewirken, ist das Scharnier 110 in Art einer sich in Höhenerstreckung von Schusskanal 102 bzw. Klappe 103 erstreckenden Schlaufe ausgebildet. Diese Schlaufe ist im Bereich des Scharniers 111, das auf dem höheren Niveau angeordnet ist, nicht verwirklicht.

Der Darstellung der Figur 10 ist zusätzlich zu entnehmen, dass der Höhensprung 116 bzw. Höhensprung 117 bzw. Höhensprung 118, die durch die Scharniere 110 und 111 gebildete Scharnierlinie bzw. die durch die durchtrennbaren Verbindungen 113 zwischen den Klappen 103 und 104 gebildete Aufreißlinie kreuzt.

Grundsätzlich können bei der veranschaulichten, nicht sichtbaren, integrierten Verkleidung die Stufen derart angeordnet sein, dass diese sowohl Aufreißlinien als auch Scharnierlinien kreuzen. Es kann hierdurch, wie veranschaulicht, eine Beifahrer-Airbagklappe mit mindestens zwei unterschiedlichen Höhen verwirklicht werden. Da der Höhensprung durch mindestens eine Scharnierlinie verläuft, ist es erforderlich, dass die Klappe ein Schwenken über zwei unterschiedliche Höhen zulässt.

Es kann, unter diesem Aspekt eine Armaturentafel mit harter Oberfläche oder eine solche mit weicher Oberfläche, bei geringfügigen Unterschieden verwirklicht werden:

Bei einer Armaturentafel mit harter Oberfläche ist die Scharnieranordnung im Bereich des Höhensprungs geteilt, mit der Konsequenz der sich ergebenden Scharniere 110 und 111. Die Scharniere werden mittels eines auf einer Seite ebenen Befestigungselementes derart an der Klappe 103 befestigt, dass das eine Scharnier 111 an der oberen Klappenhälfte und das andere Scharnier 110 so an der unteren Klappenhälfte angeordnet ist, dass sich hierbei eine schlaufenartige Materialanhäufung ergibt, die ein gleichförmiges Schwenken der Klappe 103 in einer Schwenkebene ermöglicht. Das Schwenken der anderen Klappe 104 in einer Schwenkebene ist aufgrund der ebenen Gestaltung ohnehin unproblematisch.

Im Bereich der höheren Klappenebene der Klappe 103 ergibt sich nun ein Zwischenraum zwischen Befestigungselement und Klappe, der zur Verbindung der beiden Bauteile genutzt werden kann. Diese Verbindung ist notwendig, da die Klappe 103 während des Öffnungsvorgangs des Airbags sehr hohe physische Belastungen erfährt. Um ein Ablösen der Bauteile zu verhindern, erfolgt deshalb auch hier die Verbindung. Dazu wird der Zwischenraum derart gefüllt, dass ein Verbinden der beiden Bauteile möglich ist. Dies kann durch geeignete Anordnung von Rippen 119 erfolgen, aber auch das Einfügen weiterer Bauteile ist denkbar.

Bei einer Armaturentafel mit weicher Oberfläche finden gleichfalls im Bereich der Klappe 103 die beiden Scharniere 110 und 111 Verwendung. Das eine Scharnier 111 wird an der höheren Klappenhälfte und das andere Scharnier 110 an der unteren Klappenhälfte angeordnet, sodass sich die beschriebene schlaufenartige Materialanhäufung ergibt, die das gleichförmige Schwenken der Klappe 103 in eine Schwenkebene ermöglicht. Das Befestigen erfolgt hierbei ohne zusätzliche Befestigungselemente, zum Beispiel durch Einspritzen. Um dem Airbag eine gleichförmige Angriffsfläche zu gewähren, wird im Bereich der höheren Klappenhälfte der Klappe 103 der Verlauf der unteren Klappenhälfte fortgeführt. Es entsteht somit ein zweischaliger Aufbau mit einem Hohlraum. Dieser kann mittels geeigneter Anordnung von Rippen ausgefüllt und versteift werden. Alternativ kann aber auch der Höhenunterschied zwischen unterer und oberer Klappenhälfte der Klappe 103 mittels Schaumauftrag oder durch Anbringen von sonstigen zusätzlichen Bauteilen egalisiert werden.

### Bezugszeichenliste

- 1: Verkleidung
- 2: Schusskanal
- 3: Klappe
- 4: Klappe
- 5: Austrittsöffnung
- 6: Luftsackgleitvorrichtung
- 7: Seite
- 8: Seite
- 9: Seite
- 10: Seite
- 11: Scharnier
- 12: Scharnier
- 13: Durchtrennbare Verbindung/Steg
- 14: Oberfläche
- 14a: Oberflächenbereich erhöhtes Niveau
- 14b: Oberflächenbereich nicht erhöhtes Niveau
- 15: Oberfläche
- 16: Oberfläche
- 16a: Oberflächenbereich erhöhtes Niveau
- 16b: Oberflächenbereich nicht erhöhtes Niveau
- 17: Höhensprung
- 18: Höhensprung
- 19: Höhensprung
- 30: Airbagklappenanordnung
- 50: Verkleidungsteil
- 51: Airbagklappenanordnung
- 52: Scharnierlinie
- 53: Scharnierlinie
- 54: Airbagklappe
- 55: Airbagklappe
- 56: mittlere Aufreißlinie
- 57: seitliche Aufreißlinie
- 58: seitliche Aufreißlinie
- 59: umgebender Verkleidungsteilabschnitt
- 60: Stufe
- 101: Verkleidung
- 102: Schusskanal
- 103: Klappe
- 104: Klappe
- 105: Austrittsöffnung
- 106: Seite
- 107: Seite
- 108: Seite
- 109: Seite
- 110: Scharnier
- 111: Scharnier
- 112: Scharnier
- 113: Durchtrennbare Verbindung/Steg
- 114: Oberfläche
- 114a: Erhöhter Oberflächenbereich
- 114b: Nicht erhöhter Oberflächenbereich
- 115: Oberfläche
- 115a: Erhöhter Oberflächenbereich
- 115b: Nicht erhöhter Oberflächenbereich
- 116: Höhensprung
- 117: Höhensprung
- 118: Höhensprung
- 119: Rippe
- 130: Airbagklappenanordnung

## Patentansprüche

1. Verkleidungsteil (1; 50; 101) im Innenraum eines Kraftfahrzeuges, wobei sich im Verkleidungsteil (1; 50; 101) eine Airbagklappenanordung (30; 51; 130) befindet, die beim Auslösen eines Airbags entlang mindestens einer Scharnierlinie (10, 11, 12; 52, 53; 111, 112) schwenkt, wobei das Verkleidungsteil (1; 50; 101) einen stufenartigen Höhenunterschied (16, 17, 18; 60; 117, 118, 119) auf der Oberfläche zum Innenraum aufweist und sich die Airbagklappenanordnung (30; 51, 130) im Bereich des Höhenunterschieds (16, 17, 18; 60; 117, 118, 119) befindet, **dadurch gekennzeichnet, dass** die Airbagklappenanordnung (30; 51; 130) zwei um jeweils eine Scharnierlinie (10, 11, 12; 52, 53; 111, 112) schwenkbare Airbagklappen (3, 4; 54, 55; 103, 104) aufweist, die zwischen sich eine mittlere Aufreißlinie (13; 56; 113) bilden, wobei der stufenartige Höhenunterschied (60) die Scharnierlinie (52) einer (54) der beiden Airbagklappen (54, 55) und eine seitliche Aufreißlinie (57) dieser Airbagklappe (54) kreuzt.

2. Verkleidungsteil nach Anspruch 1, **dadurch gekennzeichnet, dass** die Airbagklappen (54, 55) zwischen sich eine mittlere Aufreißlinie (56) bilden.

3. Verkleidungsteil nach Anspruch 2, **dadurch gekennzeichnet, dass** jeweils zwischen der Scharnierlinie (52, 53) und der mittleren Aufreißlinie (56) seitliche Aufreißlinien (57, 58) gebildet sind.

4. Verkleidungsteil nach einem der Ansprüche 1 bis 3, **dadurch gekennzeichnet, dass** die Scharnierlinien (10, 11, 12; 52, 53; 111, 112) parallel angeordnet sind.

5. Verkleidungsteil nach einem der Ansprüche 1 bis 4, **dadurch gekennzeichnet, dass** die Airbagklappe (3, 4; 54, 55; 103, 104), abgesehen vom stufenartigen Höhenunterschied (16, 17, 18; 60; 117, 118, 119), im Wesentlichen eben ausgebildet ist.

6. Verkleidungsteil nach einem der Ansprüche 1 bis 5, **dadurch gekennzeichnet, dass** Bestandteil des Verkleidungsteils (1; 101) ein Schusskanal (2; 102) ist und die Airbagklappenanordnung (30; 130), bei nicht ausgelöstem Airbag, eine Austrittsöffnung (5; 105) des Schusskanals (2; 102) verschließt.

7. Verkleidungsteil nach Anspruch 6, **dadurch gekennzeichnet, dass** neben der Airbagklappenanordnung (130) eine Luftsackgleitvorrichtung (106) angeordnet ist, die in einem Zwischenraum zwischen der in der Schließstellung angeordneten Airbagklappenanordnung (130) und dem Schusskanal (103) angeordnet ist.

8. Verkleidungsteil nach Anspruch 6, **dadurch gekennzeichnet, dass** die dem Fahrzeuginnenraum zugeordnete Schusskanaloberfläche (14) und Oberfläche (15) der Airbagklappenanordnung (30) jeweils durch Abschnitte mit unterschiedlichem Höhenniveau gebildet sind, wobei erhöhte Bereiche (14a, 15a) von Schusskanal (14) und Klappe (3, 4) benachbart angeordnet sind und nicht erhöhte Bereiche (14b, 15b) von Schusskanal (2) und Klappe (3, 4) benachbart angeordnet sind.

## Claims

1. A trim part (1; 50; 101) in the interior space of a motor vehicle, wherein an airbag flap arrangement (30; 51; 130) is disposed in the trim part (1; 50; 101), said airbag flap arrangement (30; 51; 130) pivoting during the release of an airbag along at least one hinge line (10, 11, 12; 52, 53; 111, 112), wherein the trim part (1; 50; 101) has a stepped difference in height (16, 17, 18; 60; 117, 118, 119) on the surface towards the interior space, and the airbag flap arrangement (30; 51; 130) is situated in the region of the difference in height (16, 17, 18; 60; 117, 118, 119), **characterized in that** the airbag flap arrangement (30; 51; 130) comprises two airbag flaps (3, 4; 54, 55; 103, 104) which are pivotable about one respective hinge line (10, 11, 12; 52, 53; 111, 112) and which form a middle tearing line (13; 56; 113) between themselves, wherein the stepped difference in height (60) crosses the hinge line (52) of one (54) of the two airbag flaps (54, 55) and a lateral tearing line (57) of said airbag flap (54).

2. A trim part according to claim 1, **characterized in that** the airbag flaps (54, 55) form a middle tearing line (56) between themselves.

3. A trim part according to claim 2, **characterized in that** lateral tearing lines (57, 58) are respectively formed between the hinge line (52, 53) and the middle tearing line (56).

4. A trim part according to one of the claims 1 to 3, **characterized in that** the hinge lines (10, 11, 12; 52, 53; 111, 112) are arranged in parallel.

5. A trim part according to one of the claims 1 to 4, **characterized in that** the airbag flap (3, 4; 54, 55; 103, 104) is arranged in a substantially flat manner, apart from the stepped difference in height (16, 17, 18; 60; 117, 118, 119).

6. A trim part according to one of the claims 1 to 5, **characterized in that** one component of the trim part (1; 101) is a chute channel (2; 102) and the airbag flap arrangement (30; 130) seals an outlet opening (5; 105) of the chute channel (2; 102) when the airbag is not released.

7. A trim part according to claim 6, **characterized in that** an airbag sliding apparatus (106) is arranged adjacent to the airbag flap arrangement (130), which airbag sliding apparatus (106) is arranged in an intermediate space between the airbag flap arrangement (130) arranged in the closed position and the chute channel (103).

8. A trim part according to claim 6, **characterized in that** the chute channel surface (14) associated with the interior space of the vehicle and the surface (15) of the airbag flap arrangement (30) are respectively formed by sections with a different height level, wherein elevated regions (14a, 15a) of the chute channel (14) and the flap (3, 4) are arranged adjacently, and non-elevated regions (14b, 15b) of chute channel (2) and flap (3, 4) are arranged adjacent to each other.

## Revendications

1. Partie d'habillage (1 ; 50 ; 101) dans l'habitacle d'un véhicule à moteur, laquelle partie d'habillage (1 ; 50 ; 101) contient une disposition de clapets de coussin gonflable de protection (30 ; 51 ; 130) qui bascule lors du déclenchement d'un coussin gonflable de protection le long d'au moins une ligne de charnière (10, 11, 12 ; 52, 53 ; 111, 112), la partie d'habillage (1 ; 50 ; 101) présentant une différence de hauteur en forme de gradin (16, 17, 18 ; 60 ; 117, 118, 119) sur la surface donnant vers l'habitacle et la disposition de clapets de coussin gonflable de protection (30 ; 51, 130) se trouvant au niveau de la différence de hauteur (16, 17, 18 ; 60 ; 117, 118, 119), **caractérisée en ce que** la disposition de clapets de coussin gonflable de protection (30 ; 51 ; 130) présente deux clapets de coussin gonflable de protection (3, 4 ; 54, 55 ; 103, 104) pouvant basculer chacun autour d'une ligne de charnière (10, 11, 12 ; 52, 53 ; 111, 112) et qui forment entre eux une ligne de déchirure médiane (13 ; 56 ; 113), la différence de hauteur en forme de gradin (60) croisant la ligne de charnière (52) de l'un (54) des deux clapets de coussin gonflable de protection (54, 55) et une ligne de déchirure latérale (57) de ce clapet de coussin gonflable de protection (54).

2. Partie d'habillage selon la revendication 1, **caractérisée en ce que** les clapets de coussin gonflable de protection (54, 55) forment entre eux une ligne de déchirure médiane (56).

3. Partie d'habillage selon la revendication 2, **caractérisée en ce que** des lignes de déchirure latérales (57, 58) sont formées entre chacune des lignes de charnière (52, 53) et la ligne de déchirure médiane (56).

4. Partie d'habillage selon l'une des revendications 1 à 3, **caractérisée en ce que** les lignes de charnière (10, 11, 12 ; 52, 53 ; 111, 112) sont disposées parallèlement.

5. Partie d'habillage selon l'une des revendications 1 à 4, **caractérisée en ce que** le clapet de coussin gonflable de protection (3, 4 ; 54, 55 ; 103, 104) est sensiblement plan, mis à part la différence de hauteur en forme de gradin (16, 17, 18 ; 60 ; 117, 118, 119).

6. Partie d'habillage selon l'une des revendications 1 à 5, **caractérisé en ce qu'**un canal d'éjection (2 ; 102) fait partie de la partie d'habillage (1 ; 101) et la disposition de clapets de coussin gonflable de protection (30 ; 130) ferme, quand le coussin gonflable de protection n'est pas déclenché, une ouverture de sortie (5 ; 105) du canal d'éjection (2 ; 102).

7. Partie d'habillage selon la revendication 6, **caractérisée en ce qu'**il est prévu à côté de la disposition de clapets de coussin gonflable de protection (130) un dispositif de glissière pour sac gonflable (106) qui est disposé dans un interstice entre la disposition de clapets de coussin gonflable de protection (130) disposée en position de fermeture et le canal d'éjection (103).

8. Partie d'habillage selon la revendication 6, **caractérisée en ce que** la surface du canal d'éjection (14) associée à l'habitacle du véhicule et la surface (15) de la disposition de clapets de coussin gonflable de protection (30) sont formées chacune par des segments ayant un niveau en hauteur différent, des zones surélevées (14a, 15a) du canal d'éjection (14) et du clapet (3, 4) étant disposées au voisinage les unes des autres et des zones non surélevées (14b, 15b) du canal d'éjection (2) et du clapet (3, 4) au voisinage les unes des autres.
